# EUROPEAN PATENT APPLICATION

(11) **EP 2 737 799 A1**
(43) Date of publication of application: **04.06.2014**
(21) Application number: 12464031.9
(22) Date of filing: 04.12.2012
(51) Int. Cl.: A01N 65/00, A01N 37/02, A01N 25/28, A01N 25/30, A01P 3/00, A01P 7/04, A01P 13/00

(54) **Biopesticide containing essential oils and process for obtaining the same**

(30) Priority: 28.11.2012 RO 201200896
(71) Applicant: SC Amia Sport International SRL, Jud. Ilfov (RO)
(72) Inventor: Stepan Emil, 061315 Bucharest (RO); Velea Sanda, Bucharest (RO); Oancea Florin, Bucharest (RO); Pairault, Andriana Liliana, Voluntari Pipera Jud. Ilfov (RO)

(57) **Abstract**

The invention refers to a biopesticide with content of encapsulated essential oils and potassium salts of fatty acids and a method to obtain said biopesticide.

In the first stage the vegetable oil is treated at ambient temperature with a solution of potassium hydroxide in the presence of a couple of surfactants and a solvent, resulting in potassium salts of fatty acids with concentration 30-40%. In the second stage, the hydrogenated vegetable oil or wax, the essential oil, a couple of surfactants and water are heated under stirring, the mixture is cooled in a controlled manner resulting in a suspension of solid lipid nanoparticles, with the nanoparticles having a shell consisting of hydrogenated vegetable oil or wax and a liquid core consisting of essential oils. The suspension is completed with potassium salts of fatty acids.

## Description

The invention refers to a biopesticide with content of encapsulated essential oils and of potassium salts of fatty acids as well to a process for the obtainment of the respective biopesticide.

Many compositions are known that contain microencapsulated essential oils.

Thus, a composition which can be used in the field of cosmetics and medicine includes one or more plant extracts, one or more types of essential oils (e.g. rosemary, mint, thyme, eucalyptus) microencapsulated, with microcapsules having dimensions 25 µm to 0.5 mm, a buffer solution such as sodium bicarbonate, and one or more adjuvants accepted for pharmaceutical or cosmetic use, all encapsulated in gelatin capsules. (Vemin, J., US patent 6.200.572 B1)

A composition in the form of microcapsules, containing pirimiphos-methyl, a synthetic pesticide, 0.1 to 95%, and (1) at least one essential oil selected from citronella oil, mint oil, d-limonene, abies sibirica oil or (2) at least one solvent - aromatic hydrocarbon C₈-C₁₁, all placed in a polymeric wall such as polyurea, aminoplast, polyurethane, or polyamide. The composition may also contain other active ingredients, such as: lambda cyhalothrin, [alpha]-cypermethrin, deltamethrin, permethrin, malathion, fenitrothion, bendiocarb, propoxur, cyfluthrin, and etofenprox. A pest control method is also presented that includes the application of the pesticide composition on surfaces or substrates of pests in a manner which ensure effective residual pesticide action (Bywater, A., Barnett, D., WO patent 2009001076 A1).

A composition with repellent, insecticide, pesticide, or ovicide action, containing microencapsulated essential oils, consist of a non-volatile vehicle component, in solid or liquid form, selected from among sesame oil, pyrethrum oil, glycerides of fatty acids and derivatives thereof, etc., at least one volatile oil selected from among cinnamon, clove, thyme, mint, geranium oil, etc. and an agent of adjuvant type, pesticide, adhesive, antioxidant, surfactant, a polymer, as steric barrier with the role of preventing the aggregation of microcapsule or as gel breaking agent, as a part of the non-volatile vehicle or inside the microcapsule. A method for the manufacture of the above compositions by dispersing the encapsulated volatile oil in an environment containing the non-volatile vehicle is also presented. The encapsulated volatile oil is obtained by a process of interfacial polymerization, causing a polyurea or polyurethane film to be formed around essential oil drops (Markus, A., Linder, C., Schuster, D., Strongin, P., EP patent 1.845.786 B1).

A composition based on solid lipid nanoparticles consists of:
(a) 1 - 40% liposoluble UV absorber,
(b) 20 - 98.9% a solid lipid compound,
(c) 0,1 - 20% emulsifier, and
(d) 0 - 40% a liquid lipid compound or a liquid UV absorber, miscible with the oils.

The UV absorber is selected from among the derivatives of the p-aminobenzoic acid, phenyltriazine, trisiloxane, etc. The component (b) is chosen from among cetyl palmitate, glyceryl trilaurate, glyceryl tristearate, glyceryl trimyristate, glyceryl tripalmitate, glyceryl tribehenate, cholesterol, stearic acid, beeswax, mono-, di-, and triglycerides of fatty acids C₁₆-C₁₈. The emulsifier is chosen from the alkaline salts, ammonium salts, amines of fatty acids, saturated or unsaturated alkyl sulphates, acids or salts, sorbitan esters, saccharose, alkyl glucosides, alkyl maltosides, betaines, proteins, alkyl phosphates, etc. The component (d) is selected from the triglycerides of the caprylic/capric acid and din ethylhexyl methoxycinnamate (Herzog, B., US patent 7.147.841).

Compositions have disadvantages related to: microcapsule size, which are tens or hundreds of µm, which gives them higher specific surface, toxic and non-environmentally-friendly aromatic solvents and adjuvants used for microencapsulation, both for inside compositions and for the microcapsule surface.

The processes have disadvantages related to operations involving toxic and non-environmentally-friendly products (e.g. aromatic solvents, synthetic pesticides, polyisocyanates, etc.)

The technical problem that this invention aims to solve is to increase the physical stability and protection of the essential oils, which are volatile biopesticides with complex fungicidal or herbicidal action, by obtaining solid lipid nanoparticles with high specific surface, consisting of a hydrogenated vegetable oil or wax shell which protects a liquid core consisting of essential oils and allows biopesticides from the core to be released in a controlled manner in the application environment. Solid lipid nanoparticles are suspended in an aqueous medium, containing potassium salts of fatty acids, bioproducts with insecticidal action.

The biopesticide according to the invention eliminates the aforementioned disadvantages by that it consists of a suspension of lipid nanoparticles consisting of 8-10% in weight hydrogenated vegetable oil, with the vegetable oil selected from among sunflower, rapeseed, soy, safflower, palm tree, linseed, hemp, cotton, peanut, pumpkin, corn germ, coconut, palm tree seeds, ricin, olive, microalgal oil, alone or as mixtures thereof, in natural state (raw), purified or recovered from waste, or wax, selected from among beeswax, candelilla wax, carnauba, with congelation point 55-86°C, 6-8% in weight essential oil, selected from rosemary, thyme, cinnamon, clove, mint, basil, eucalyptus, neem, dill, pine, lemon, tea tree (Melaleuca), tobacco, black pepper, anisole, geranium, orange, lemongrass, juniper, garlic, onion, caraway, coriander, lavender oil, alone or as a mixture, 2.8-4.6% in weight surfactant with HLB < 8, selected from SPAN 80 (sorbitan monooleate), sorbitan monolaurate, lecithin, alcohols C₁₂-C₁₄.2EO, alcohols C₁₂-C₁₄.3EO, glycerol monolaurate, glycerol monooleate, diethanolamid of the lauric acid, 2.6-3.5% in weight surfactant with HLB > 8, selected from TWEEN 20 (polyoxyethylene (20) sorbitan monolaurate), alcohols C₁₂-C₁₄.9EO, alcohols C₁₂-C₁₄.10EO, ricin oil ethoxylate (40EO), lauryl dimethyl aminoxide, myristil dimethyl aminoxide, oleic acid ethoxylate (9EO), 1.7-2.1% in weight glycerin, 18-22% in weight potassium salts of fatty acids from vegetable oil, selected from sunflower, rapeseed, soy, safflower, palm tree, in, hemp, cotton, peanut, pumpkin, corn germs, coconut, palm tree seed, ricin, olive, microalgal oil, alone or as mixtures thereof, in natural state (raw), purified or recovered from waste, 0-18.6% in weight alcohol, such as ethanol, 2-propanol, 1,2-propanediol, 1,2,3-propanetriol (glycerin), polypropyleneglycols, polyethyleneglycols and 35.7-57.8% in weight water, and the method for obtaining it removes the aforementioned disadvantages by that, in the first stage, vegetable oil in a proportion of 27.6-36.8% in weight of the final composition of the first stage is treated under stirring with a surfactant with HLB < 8, in a proportion of 1-1.5% in weight of the final composition of the first stage, with a surfactant with HLB > 8, in proportion of 1-1,5% in weight of the final composition of the first stage, stirring is maintained for 5 minutes, the mixture is then treated with potassium hydroxide in excess by 0.5-2% in weight from the stoichiometric requirement from the saponification process, dissolved in demineralized water, taken with a ratio of 18.1-63.2% in weight of the final composition of the first stage and an alcohol taken in proportion of 0-33.9% in weight of the final composition of the first stage, the reaction mass is maintained at ambient temperature for 3-6 hours, pH is corrected to 9-9.5 with a concentrated solution of citric acid, resulting, at the end of the stage, a composition containing 30-40% potassium salts of fatty acids, and in the second stage, a mixture is heated under stirring consisting of hydrogenated vegetable oil or wax with congelation point 55-86°C, taken in proportion of 8-10% in weight of the final suspension, essential oil alone or as a mixture in proportion of 6-8% in weight of the final suspension, surfactant with HLB < 8, in proportion of 2-4% in weight of the final suspension, surfactant with HLB > 8, in proportion of 2-3% in weight of the final suspension, potassium salts of fatty acids in proportion of 10-12.5% in weight of the final suspension, prepared in the first stage, demineralized water in proportion of 17.5-26% in weight of the final suspension, the mixture is maintained at 60-90°C for 15 minutes and then gradually cooled, under stirring, to a temperature of 20°C, for 2-4 hours, forming a suspension of solid lipid nanoparticles, having a shell consisting of a hydrogenated vegetable oil or of a wax, and a liquid core, consisting of essential oils, then potassium salts of fatty acids are added under stirring, at the ambient temperature, in proportion of 40-52.5% in weight of the final suspension, prepared in the first stage, and stirring is maintained for another 30 minutes, finally obtaining a suspension containing solid lipid nanoparticles and potassium salts of fatty acids.

The invention has the following advantages:
o bioproducts have complex pesticide activity by the association of the insecticidal effect of potassium salts of fatty acids with the multiple insecticidal-fungicidal and herbicidal effects of the essential oils
o the integrity of the essential oils is maintained with respect to volatilization and oxidation by protection with a solid shell
o excellent stability in time by eliminating the risk of degradation of the two types of biopesticides due to reactions between them, as the bio components are separated by an inert shell
o the small dimensions of nanoparticles ensure high specific areas and controlled release of essential oils

In the following are presented examples illustrating the invention.

### Example 1

In a 2-neck flask with capacity 2 1, fitted with electric stirring, insert 500 g of palm tree oil with Iₛₐₚ. = 201.56 mg KOH/g. Start the stirring and insert 14 g lecithin and 14 g myristyl dimethyl aminoxide. Keep stirring for 5 minutes then introduce a solution formed by dissolving 119 g of potassium hydroxide flakes 85% in 318 g of demineralized water and 398 g 96% ethanol. The reaction mass is kept at ambient temperature for 3 hours, then the pH is corrected to 9-9.5 with a concentrated solution of citric acid. The result is 1364 g of composition consisting of 40% potassium salts of fatty acids (soap), 4% glycerin, 1% lecithin, 1% myristyl dimethyl aminoxide, 28% ethanol.

In a 2-neck flask having the capacity of 2 1, fitted with an electric driven mixing, introduce 160 g of hydrogenated sunflower oil, having a congelation point of 67°C. Heat to 70°C and introduce, under stirring, 64 g thyme oil, 64 g rosemary oil, 48 g lecithin, 48 g myristyl dimethyl aminoxide, 160 g of the composition containing 40% potassium salts of fatty acids, prepared as above, and 416 g demineralized water. Heat the mixture under stirring, maintaining it at a temperature of 70°C for 15 minutes. Cool gradually, under stirring, to a temperature of 20°C, for 2 hours. A suspension of solid lipid nanoparticles is formed, with the nanoparticles having a shell formed by hydrogenated sunflower oil and a liquid core consisting of thyme and rosemary oil. Add under stirring at ambient temperature 640 g of the composition containing 40% potassium salts of fatty acids, prepared as above, maintaining the stirring for 30 minutes. The result is a suspension of 1600 g containing solid lipid nanoparticles. The suspension has the following composition: 10% hydrogenated sunflower oil, 4% thyme oil, 4% rosemary oil, 3.5% lecithin, 3,5% myristyl dimethyl aminoxide, 2% glycerin, 20% potassium salts of fatty acids (potassium soap), 14% ethanol and 49% water.

### Example 2

In a 2-neck flask having the capacity of 2 1, fitted with an electric driven mixing introduce 400 g sunflower oil with Iₛₐₚ. = 191.89 mg KOH/g. Start stirring and introduce 19 g SPAN 80 (sorbitan monooleate) and 19 g TWEEN 20 (Polyoxyethylene (20) sorbitan monolaurate). Maintain stirring for 5 minutes and then introduce a solution formed by dissolving 92 g potassium hydroxide flakes 85% in 917 g demineralized water. The reaction mass is maintained at ambient temperature for 6 hours, then correct the pH to 9-9.5 with a concentrated solution of citric acid. Result 1450 g of composition consisting of 30% potassium salts of fatty acids (soap), 2.9% glycerin, 1.3% SPAN 80, 1.3% TWEEN 20.

In a 2-neck having the capacity of 2 1, fitted with an electric driven mixing, introduce 144 g (partially) hydrogenated soy oil, having a congelation point of 55°C. Heat to 60°C and introduce, under stirring, 48 g cinnamon oil, 48 g basil oil, 48 g SPAN 80, 32 g TWEEN 20, 160 g of the composition containing 30% potassium salts of fatty acids, prepared as above, and 280 g demineralized water. Heat the mixture under stirring, keeping it at 60°C for 15 minutes. Cool gradually, under stirring, to a temperature of 20°C, for 3 hours. A suspension of solid lipid nanoparticles is formed, with the nanoparticles having a shell consisting of partially hydrogenated soy oil and a liquid core consisting of cinnamon and basil oil. Add under stirring at ambient temperature 840 g of the composition containing 30% potassium salts of fatty acids, prepared as above, maintaining the stirring for 30 minutes. The result is a suspension of 1600 g containing solid lipid nanoparticles. The suspension has the following composition: 9% (partially) hydrogenated soy oil, 3% cinnamon oil, 3% basil oil, 3.8% SPAN 80, 2.8% TWEEN 20, 1.8% glycerin, 18.8% potassium salts of fatty acids (potassium soap) and 57.8% water.

### Example 3

In a 2-neck flask having the capacity of 2 1, fitted with an electric driven mixing, introduce 400 g rapeseed oil with Iₛₐₚ. = 191.3 mg KOH/g. Start stirring and introduce 15 g alcohol C₁₂-C₁₄.2EO and 15 g alcohol C₁₂-C₁₄-9EO. Keep stirring for 5 minutes then introduce a solution formed by dissolving 155 g potassium hydroxide, 50% solution, in 464 g of demineralized water and 400 g 1.2-propanediol. The reaction mass is kept at ambient temperature for 4 hours, than correct the pH to 9-9.5 with a concentrated solution of citric acid. The result is 1449 g of composition consisting of 30% potassium salts of fatty acids (soap), 2.88% glycerin, 1% alcohol C₁₂-C₁₄.2EO, 1% alcohol C₁₂-C₁₄.9EO, 27.6% 1,2-propanediol.

In a 2-neck flask having the capacity of 2 1, fitted with an electric driven mixing, introduce 128 g carnauba wax, having a congelation point of 86°C. Heat to 90°C and introduce, under stirring, 112 g clove oil, 64 g alcohol C₁₂-C₁₄.2EO, 32 g alcohol C₁₂-C₁₄.9EO, 192 g of the composition containing 30% potassium salts of fatty acids, prepared as above and 304 g demineralized water. Heat the mixture under stirring, maintaining it at 70°C for 15 minutes. Cool gradually, under stirring, to a temperature 20°C, for 4 hours. A suspension of solid lipid nanoparticles is formed, with the nanoparticles having a shell consisting of carnauba wax and a liquid core consisting of clove oil. Add, under stirring, at ambient temperature, 768 g of the composition containing 30% potassium salts of fatty acids, prepared as above, maintaining the stirring for 30 minutes. The result is a suspension of 1600 g containing solid lipid nanoparticles. The suspension has the following composition: 8% carnauba wax, 7% clove oil, 4.6% alcohol C₁₂-C₁₄.2EO, 2.6% alcohol C₁₂-C₁₄.9EO, 1.7% glycerin, 18% potassium salts of fatty acids (potassium soap), 16.6% 1,2-propanediol and 41.5% water.

### Example 4

In a 2-neck flask having the capacity of 2 1, fitted with an electric driven mixing, introduce 500 g residual oil from fast food restaurants with Iₛₐₚ. = 188,6 mg KOH/g. Start stirring and introduce 20 g of the lauric acid diethanolamide and 20 g ricin oil ethoxylate (40EO). Keep stirring for 5 minutes then introduce a solution formed by dissolving 113 g potassium hydroxide flakes 85% in 246 g demineralized water and 460 g 2-propanol. The reaction mass is kept at ambient temperature for 3 hours, then correct the pH to 9-9.5 with a concentrated solution of citric acid. The result is 1357 g of composition consisting of 40% potassium salts of fatty acids (soap), 3.8% glycerin, 1.5% lauric acid diethanolamide, 1.5% ricin oil ethoxylate (40EO), 33.9% 2-propanol

In a 2-neck flask having the capacity of 2 1, fitted with an electric driven mixing, introduce 160 g residual hydrogenated vegetable oil from margarine factories, with congelation point 59°C. Heat to 65°C and introduce, under stirring, 32 g eucalyptus oil, 32 g mint oil, 32 g coriander oil, 32 g lauric acid diethanolamide, 32 g ricin oil ethoxylate (40EO), 200 g of the composition containing 40% potassium salts of fatty acids, prepared as above and 400 g demineralized water. Heat the mixture under stirring, maintaining it at 70°C for 15 minutes. Cool gradually, under stirring, to a temperature of 20°C, for 3 hours. A suspension of solid lipid nanoparticles is formed, with the nanoparticles having a shell consisting of hydrogenated sunflower oil and a liquid core consisting of eucalyptus, mint and coriander oil. Add under stirring at ambient temperature 680 g of the composition containing 40% potassium salts of fatty acids, prepared as above, maintaining the stirring for 30 minutes. The result is a suspension of 1600 g containing solid lipid nanoparticles. The suspension has the following composition: 10% residual hydrogenated vegetable oil from margarine factories, 2% eucalyptus oil, 2% mint oil, 2% coriander oil, 2.8% lauric acid diethanolamide, 2.8% ricin oil ethoxylate (40EO), 2.1% glycerin, 22% potassium salts of fatty acids (potassium soap), 18.6% 2-propanol and 35.7% water.

### Example 5

Use the same process as described at examples 1-4, using as vegetable oil, soy, safflower, linseed, hemp, cotton, peanut, pumpkin, corn germs, coconut, palm tree seed, ricin, olive, microalgal oil, alone or as mixtures thereof, in natural state (raw), purified or recovered from waste, and as hydrogenated vegetable oil, the same type of oils as above, solidified by hydrogenation; replacing carnauba wax with beeswax or candelilla wax; using as essential oil neem, dill, pine, lemon, tea tree (Melaleuca), tobacco, black pepper, anisole, geranium, orange, lemongrass, juniper, garlic, onion, caraway, coriander, lavender oil, alone or as a mixture; using as surfactant with HLB < 8 sorbitan monolaurate, alcohols C₁₂-C₁₄.3EO, glycerol monolaurate, glycerol monooleate; using as surfactant with HLB > 8 alcohols C₁₂-C₁₄.10EO, lauryl dimethyl aminoxide, oleic acid ethoxylate (9EO); using as alcohol 1,2,3-propanetriol, polypropyleneglycols, polyethyleneglycols. The process parameters and the percentage concentrations of biopesticide components are within the limits of the values shown in the above examples.

## Claims

1. Biopesticide with content of encapsulated essential oils, **characterized in that** it consists of a suspension of lipid nanoparticles consisting of 8-10% in weight hydrogenated vegetable oil or wax with congelation point 55-86°C, 6-8% in weight essential oil, 2.8-4.6% in weight surfactant with HLB < 8, 2.6-3.5% in weight surfactant with HLB > 8, 1.7-2/1% in weight glycerin, 18-22% in weight potassium salts of fatty acids from vegetable oil, 0-18.6% in weight alcohol and 35,7-57,8% in weight water.

2. Biopesticide according to claim 1, **characterized in that** the vegetable oil is selected from among sunflower, rapeseed, soy, safflower, palm tree, linseed, hemp, cotton, peanut, pumpkin, corn germs, coconut, palm tree seed, ricin, olive, microalgal oil, alone or as mixtures thereof, in natural state (raw), purified or recovered from waste, the wax is selected from among beeswax, candelilla, carnauba, the essential oil is selected from among rosemary, thyme, cinnamon, clove, mint, basil, eucalyptus, neem, dill, pine, lemon, tea tree (Melaleuca), tobacco, black pepper, anisole, geranium, orange, lemongrass, juniper, garlic, onion, caraway, coriander, lavender oil, alone or as a mixture, the surfactant with HLB < 8 is selected from among SPAN 80 (sorbitan monooleate), sorbitan monolaurate, lecithin, alcohols C₁₂-C₁₄.2EO, alcohols C₁₂-C₁₄.3EO, glycerol monolaurate, glycerol monooleate, lauric acid diethanolamide, the surfactant with HLB > 8 is selected from among TWEEN 20 (polyoxyethylene (20) sorbitan monolaurate), alcohols C₁₂-C₁₄.9EO, alcohols C₁₂-C₁₄.10EO, ricin oil ethoxylate (40EO), lauryl dimethyl aminoxide, myristyl dimethyl aminoxide, oleic acid ethoxylate (9EO), and the alcohol is of the type of ethanol, 2-propanol, 1,2-propanediol, 1,2,3-propanetriol (glycerin), polypropyleneglycols, polyethyleneglycols.

3. Process to obtain the biopesticide with content of encapsulated essential oils, **characterized in that** in the first stage, the vegetable oil in proportion of 27.6-36.8% in weight of the final composition of the first stage is treated under stirring with a surfactant with HLB < 8, in proportion of 1-1.5% in weight of the final composition of the first stage, with a surfactant with HLB > 8, in proportion of 1-1.5% in weight of the final composition of the first stage, stirring is maintained for 5 minutes, the mixture is then treated with potassium hydroxide in excess by 0.5-2% in weight from the stoichiometric requirement from the saponification process, dissolved in demineralized water, taken with a ratio of 18.1-63.2% in weight of the final composition of the first stage and an alcohol taken in proportion of 0-33.9% in weight of the final composition of the first stage, the reaction mass is maintained at ambient temperature for 3-6 hours, pH is corrected to 9-9.5 with a concentrated solution of citric acid, resulting, at the end of the stage, a composition containing 30-40% potassium salts of fatty acids, and in the second stage, a mixture is heated under stirring consisting of hydrogenated vegetable oil or wax with congelation point 55-86°C, taken in proportion of 8-10% in weight of the final suspension, essential oil alone or as a mixture in proportion of 6-8% in weight of the final suspension, surfactant with HLB < 8, in proportion of 2-4% in weight of the final suspension, surfactant with HLB > 8, in proportion of 2-3% in weight of the final suspension, potassium salts of fatty acids in proportion of 10-12,5% in weight of the final suspension, prepared in the first stage, demineralized water in proportion of 17.5-26% in weight of the final suspension, the mixture is kept at 60-90°C for 15 minutes and then gradually cooled under stirring to 20°C, for 2-4 hours, forming a suspension of solid lipid nanoparticles, having a shell consisting of the hydrogenated vegetable oil or wax and a liquid core consisting of essential oils, then potassium salts of fatty acids are added under stirring at ambient temperature, in proportion of 40-52.5% in weight of the final suspension, prepared in the first stage, and stirring is maintained for 30 minutes, finally obtaining a suspension containing solid lipid nanoparticles and potassium salts of fatty acids.
